# EUROPEAN PATENT APPLICATION

(11) **EP 0 962 726 A2**
(43) Date of publication of application: **08.12.1999**
(21) Application number: 99109355.0
(22) Date of filing: 01.06.1999
(51) Int. Cl.: F25B 41/06, G05D 23/12

(54) **Right angle thermally responsive expansion valve**

(30) Priority: 01.06.1998 US 88462
(71) Applicant: EATON CORPORATION, Cleveland, Ohio 44114-2584 (US)
(72) Inventor: Torrence, Robert James, Sanford, South Carolina 27330 (US)
(74) Representative: Geyer, Ulrich F., Dr. Dipl.-Phys.

(57) **Abstract**

A thermally responsive expansion valve (10') having an inlet (14') and outlet (16) disposed at right angles in a body (12') having a valving passage (18) communicating between the inlet (14') and outlet (16) with a valve seat (20) and a valve obturator (36) moveable with respect to the valve seat (20) for controlling flow through the valving passage (18). A fluid filled capsule (22) attached to the valve body (12') has a diaphragm (28) moveable in response to changes in pressure in the fluid capsule (22) which is intended for connection to a remote fluid filled sensing bulb through a capillary tube (34). A one piece operating member (48) has a pad (50) contacting the diaphragm (28) and three integrally formed legs (52,54,56) each slidably received in a bore (44,46) in the body. A capped spring (40) biases the obturator (36) against the valve seat (20) and upon movement of the diaphragm (28) and pad (50), the legs (52,54,56) are operable to act against the cap (38) and overcome the spring bias to permit the obturator (36) to move away from the valve seat (20). A spring retainer (42) is pre-positioned in the inlet to provide a predetermined bias of the spring (40) and thus calibration after assembly is eliminated.

## Description

### CROSS-REFERENCE TO RELATED APPLICATIONS

Not Applicable

### STATEMENT REGARDING FEDERALLY SPONSORED RESEARCH OR DEVELOPMENT

Not Applicable

### MICROFICHE APPENDIX

Not Applicable

### BACKGROUND OF THE INVENTION

The present invention relates to expansion valves of the type employed for controlling flow of refrigerant in a circulating refrigeration or air conditioning system and is suitable for use with automotive air conditioning systems. In such automotive air conditioning systems, it is often necessary to provide for connection of the valve to the evaporator and condenser conduits which are disposed at right angles. Thus it has been found necessary to configure the valve ports to be disposed at right angles for convenient connection of the valve to the condenser and evaporator refrigerant conduits.

Expansion valves employed for automotive air conditioning systems typically utilize a fluid filled capsule having a moveable wall or diaphragm which moves in response to changes in fluid pressure brought about by a temperature sensing element connected in heat transfer relationship with the fluid in the capsule. Typically, the capsule will be attached to one end of a capillary tube which has an opposite end connected to a remotely located thermally responsive sensing bulb filled with fluid which communicates through the capillary with the fluid in the capsule.

An arrangement of a prior art right angle expansion valve is shown in FIG. 7 wherein the capsule indicated generally at 1 has a capillary 2 attached thereto for communication with the fluid filled chamber 3 having a moveable wall in the form of diaphragm 4 with the capsule attached to an end of valve block 5 which has an inlet port 6 disposed at right angles to an outlet port 7, The inlet and outlet ports are interconnected by a valving passage 8 having an annular valve seat with a moveable valve member 9 seated thereon. The valve member is biased against the valve seat by a cap 10 urged against the ball by one end of a compression spring 11 which has its opposite end registered against an adjustment ring 12 threadedly received in the inlet passage 6.

Three push rods interconnect the diaphragm 4 and the spring cap 10, two of which are illustrated in FIG. 7 and denoted by reference 13, 14.

In operation, expansion of the fluid in a remote unshown thermal sensing bulb enters chamber 3 through capillary 4 causes diaphragm 4 to move the pins 13, 14 downwardly to relieve the preload of cap 10 on the valve member 9 to permit the valve member to move away from the valve seat and permit flow from inlet 6 through passage 8 at reduced pressure to outlet 7.

In the aforesaid prior art right angle thermal expansion valves, it has been necessary to provide a calibration operation in which the ring 12 is rotated by insertion of a tool (not shown) through inlet 6 to adjust the preload of the spring 11 on the cap 10 and valve member 9 for a predetermined temperature/pressure setting within chamber 3. Variations in the length of the pins 13, 14 due to manufacturing tolerances have, in some instances caused the cap 11 to be slightly misaligned and to cause problems in maintaining consistency and repeatability of operation of the valve.

Accordingly, it has been desired to provide a way of simplifying the manufacturing, assembly and calibrations of a right angle thermal expansion valve and provide increased repeatability and reliability in a manner which provides reduced cost for high volume production such as required for such valves intended for installation in automotive air conditioning systems.

### BRIEF SUMMARY OF THE INVENTION

The present invention provides a thermally responsive expansion valve of the type having the inlet and outlet ports disposed at right angles with a fluid filled thermally responsive capsule attached to the valve body at an end thereof. The capsule has a moveable wall or diaphragm therein responsive to the thermally induced changes in pressure of the fluid filled chamber. Movement of the diaphragm is transmitted to a unitary operating member having a pad registered against the one face of the diaphragm and three integrally formed extensions or legs protruding therefrom which are slidably guided through passages in the valve body for effecting relief of a bias force or preload on a moveable valve member disposed against a valve seat in a passage interconnecting the inlet and outlet. A retaining member is pre-positioned in the valve inlet for providing a predetermined preload of a spring having one end registered against the cap for providing a closing force or preload on the valve member.

The pad member with its extensions may then be assembled from the capsule end of the valve body and the capsule attached without requiring further adjustment or calibration of the valve.

The present invention thus provides a simplified and reduced cost right angle thermal expansion valve which is repeatable and reliable in actuation and is easy to assemble in mass production.

### BRIEF DESCRIPTION OF THE DRAWINGS

FIG. 1 is a cross-sectional view of the valve assembly of the present invention;
FIG. 2 is a perspective view of the unitary operating pad member with extensions;
FIG. 3 is a bottom view of the operating member of FIG. 2;
FIG. 4 is a section view taken along section indicating lines 4-4 of FIG. 3;
FIG. 5 is a view of a flat blank from which the preload spring retainer of the valve of FIG. 1 is formed; and,
FIG. 6 is a section view taken of the spring retainer formed from the blank of FIG. 5.
FIG. 7 is a section view of a Prior Art device.

### DETAILED DESCRIPTION OF THE INVENTION

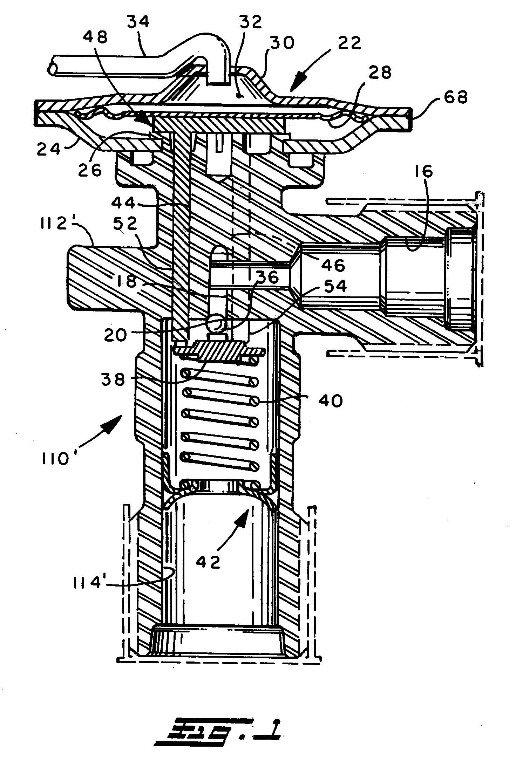

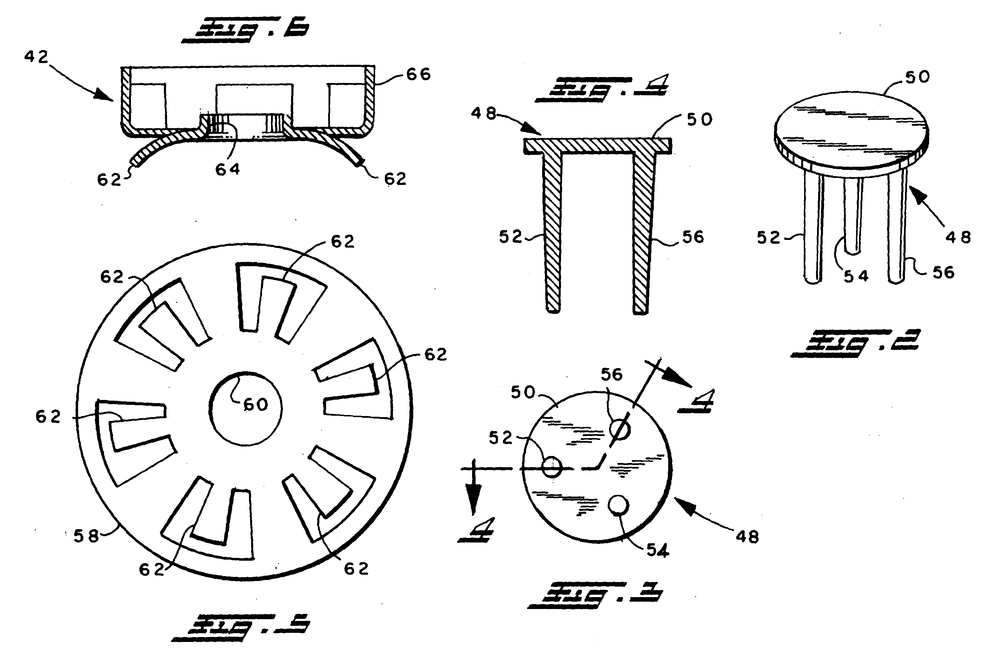

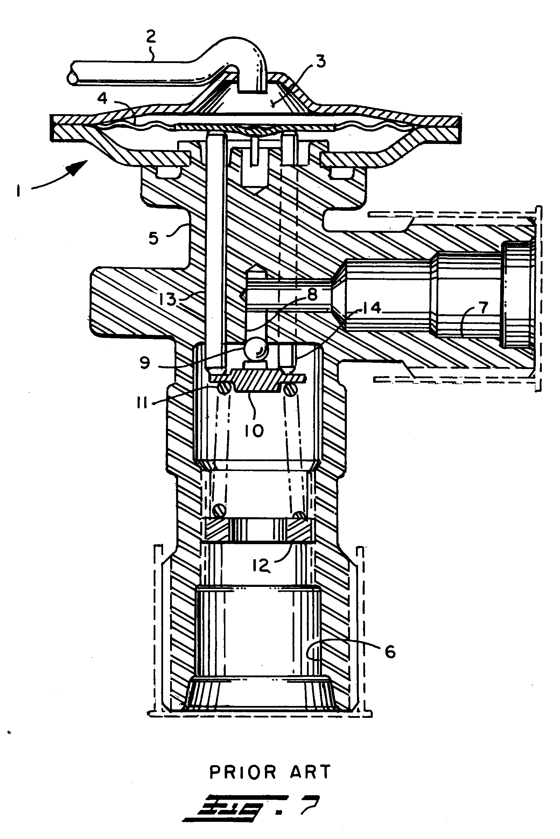

Referring to FIGS. 1 through 6, the valve assembly of the present invention is indicated generally at 10' and has a valve body 12' having an inlet 14' and an outlet 16 which is disposed at generally right angles to the inlet 14'. The inlet 14' and outlet 16 are connected by a valving passage 18 which has an annular valve seat 20 formed therein at the end of inlet 14'. Valve body 12' is preferably formed as a single cast metallic member.

A fluid pressure responsive capsule indicated generally at 22 is attached to the upper end of the body 12' and has a lower shell portion 24 which is secured to the body by deformation of an annular flange 26 formed on the upper end of body 12' which flange extends through an aperture formed in the central region of the lower shell 24. The lower shell 24 has a moveable wall or diaphragm 28 sandwiched peripherally between lower shell 24 and an upper shell member 30. The upper shell 30 thus forms a closed chamber 32 with diaphragm 28 which chamber is filled with fluid which communicates through a capillary tube 34 having one end secured in upper shell 30 and the opposite end of capillary 34 connected with a remote fluid filled temperature sensing bulb (not shown).

A preferably spherical valve member or obturator 36 is disposed in the inlet 114 and is biased against valve seat 20 by the upper surface of an end cap 38 seated on the upper end of a compression spring 40. Spring 40 has its lower end registered against a retaining member indicated generally at 42 disposed in the inlet 14' and which will be described hereinafter in greater detail.

The valve body 12' has three spaced, generally parallel, bores formed therein, two of which are illustrated and denoted by reference numerals 44, 46 in FIG. 1.

Referring to FIGS. 1 through 4, an operating member is indicated generally at 48 and includes an upper generally flat disc shaped pad portion 50 having three downwardly extending generally parallel extensions or legs 52, 54, 56 disposed in generally equally spaced arrangement about the underside of pad 50. Legs 52, 54, 56 are arranged to co-locate with the three bores such as 44, 46 formed in the block. It will be understood that the operating member 48 is formed integrally as a one-piece member. In the present practice of the invention, the operating member 48 is preferably formed of die cast metal. However, the operating member may alternatively be formed of plastic material.

Referring to FIG. 1, the operating member 48 is received in the body with the upper surface of pad 50 contacting the undersurface of diaphragm 28 and with each of the extensions 52, 54, 56 slidably received in one of the three bores such as 44, 46.

Referring to FIGS. 5 and 6, the retaining member 42 is formed from a flat blank 58 configured as shown in FIG. 5 as having a central aperture 60 with a plurality of cutouts forming a plurality of circumferentially spaced radially outwardly extending tabs 62.

Referring to FIG. 6, the retaining member 48 is shown in its formed configuration wherein the rim of aperture 60 is formed into an upstanding flange 64 and the outer periphery is formed into an annular upstanding flange 66 having a diameter generally coinciding with that of the radially outward edges of tab 62 which are each deformed slightly downwardly as illustrated in FIG. 6. Thus, the retainer 42 is inserted into the inlet 14' and located predetermined measured distance from valve seat 20 so as to provide a desired amount of compression of spring 40 and preload on the valve member 36. It will be understood that the tabs 62 frictionally engaged the wall of inlet 14' and retain the retainer 42 in the predetermined position to maintain the desired preload on spring 40.

Once the valve member 36, cap 38, spring 40 and retainer 42 are pre-assembled, the lower shell of the capsule 22 is attached to the block by rollover or flaring of flange 26 and the operating member 48 is installed. The diaphragm and upper shell are then secured in sandwich arrangement and sealed over the lower shell 24, as for example, by peripheral weldment denoted by reference numeral 68. The capillary 34 may then be installed. As the temperature sensing fluid communicating from the remote unshown sensing bulb through capillary 34 causes expansion of the fluid in chamber 32, the diaphragm 28 moves the operating member 48 downward to cause the ends of the extensions 52, 54, 56 to relieve the preload of the spring cap 38 and permit the valve member 36 to move away from valve seat 20 and permit flow through passage 18 to the outlet 16.

The present invention thus provides a reduced cost, easy to assemble and calibrate right angle thermal expansion valve suitable for automotive air conditioning applications which has a unique one-piece operating member for reliably and repeatably transmitting the sensing diaphragm movement to relieve the valve preload and permit valve opening. The construction of the valve assembly of the present invention permits pre-calibration prior to assembly and thus reduces manufacturing costs.

Although the invention has hereinabove been described with respect to the illustrated embodiments, it will be understood that the invention is capable of modification and variation and is limited only by the following claims.

## Claims

1. A thermally responsive expansion valve assembly for use in controlling flow of refrigerant in a circulating system comprising:
(a) a valve body having an inlet and an outlet disposed at generally right angles to said inlet and a valving passage with a valve seat having an obturator moveably disposed thereagainst operative upon movement for controlling flow between said inlet and said outlet;
(b) a thermally responsive capsule attached to said body having a chamber therein with a moveable wall, said chamber filled with fluid, wherein said wall is moved in response to temperature induced changes in the pressure of said fluid in said capsule;
(c) means biasing said obturator against said valve seat; and,
(d) an operating member having a pad portion and at least three elongated projections extending from said pad portion in generally spaced parallel arrangement with said pad portion and said extensions being formed integrally as a one piece member, wherein said pad portion is disposed in contact with said moveable wall and said extensions are moveably received through said body each with an end thereof extending into said inlet and operative upon movement of said moveable wall for overcoming the effect of said biasing means on said obturator and permitting flow in said valving passage.

2. The valve assembly defined in claim 1, wherein said means biasing said obturator includes a compression spring retained in said inlet and a bearing plate contacting said obturator and the end of each of said extensions.

3. The valve assembly defined in claim 1, wherein said obturator has a generally spherical configuration.

4. The valve assembly defined in claim 1, wherein said operating member is formed of die cast metallic material.

5. The valve assembly defined in claim 1, wherein said operating member is formed of plastic material.

6. The valve assembly defined in claim 1, wherein said pad portion of said operating member has a generally flat disc shaped configuration.

7. The valve assembly defined in claim 1, wherein said pad portion has a generally flat surface thereon, with a thickness substantially less than the transverse dimension thereof.

8. The valve assembly defined in claim 1, wherein said body is formed integrally as one piece of cast metallic material.

9. The valve assembly defined in claim 1, wherein said means biasing said obturator includes a spring having one reaction end thereof registered against a retainer frictionally engaging said body inlet.

10. A method of making a thermally responsive expansion valve having the inlet and outlet at right angles comprising:
(a) disposing a valve obturator in a valving passage and moving said obturator with respect to a valve seat for connecting the inlet and outlet;
(b) providing a thermally responsive capsule having a moveable wall;
(c) biasing said obturator against said valve seat;
(d) forming a pad integrally with three extensions and disposing said pad in contact with said moveable wall and disposing said extensions for overcoming said biasing upon movement of said moveable wall.

11. The method defined in claim 10, wherein said biasing includes preloading a spring and applying said preload to said obturator; and, said varying includes relieving said preloading.

12. The method defined in claim 10, wherein said step of moving said extensions includes slidably guiding said extensions.
